# EUROPÄISCHE PATENTSCHRIFT

(11) **EP 1 181 256 B1**
(45) Veröffentlichungstag und Bekanntmachung des Hinweises auf die Patenterteilung: **29.03.2006**
(21) Anmeldenummer: 00940146.4
(22) Anmeldetag: 22.04.2000
(51) Int. Cl.: C03C 17/25

(54) **VORGESPANNTES, MIT EINER WISCHFESTEN, PORÖSEN SIO2-ANTIREFLEX-SCHICHT VERSEHENES SICHERHEITSGLAS UND VERFAHREN ZU DESSEN HERSTELLUNG**
TEMPERED SAFETY-GLASS THAT IS PROVIDED WITH A SCRATCH-RESISTANT, POROUS SIO2 ANTIREFLECTIVE LAYER AND METHOD FOR PRODUCING THE SAME
VERRE DE SECURITE TREMPE, POURVU D'UNE COUCHE EN SIO2 ANTIREFLETS, RESISTANTE A L'ABRASION ET POREUSE, ET SON PROCEDE DE FABRICATION

(30) Priorität: 26.04.1999 DE 19918811
(43) Veröffentlichungstag der Anmeldung: 27.02.2002
(73) Patentinhaber: CENTROSOLAR Glas GmbH & Co. KG, 90768 Fürth (DE)
(72) Erfinder: GLAUBITT, Walther, D-97276 Margetshöchheim (DE)
(74) Vertreter: Tergau & Pohl Patentanwälte
(86) Internationale Anmeldenummer: PCT/DE2000/001301
(87) Internationale Veröffentlichungsnummer: WO 2000/064830

(56) Entgegenhaltungen:
- EP-A- 0 597 490
- EP-A- 0 835 849
- WO-A-97/06896
- GOMBERT A ET AL: "Glazing with very high solar transmittance" SOLAR ENERGY,GB,PERGAMON PRESS. OXFORD, Bd. 62, Nr. 3, 1. März 1998 (1998-03-01), Seiten 177-188, XP004122620 ISSN: 0038-092X
- CHEMICAL ABSTRACTS, vol. 108, no. 10, 7. März 1988 (1988-03-07) Columbus, Ohio, US; abstract no. 80596k, Seite 338; XP002147675 & JP 62 226840 A (SHIMADZU CORP.) 5. Oktober 1987 (1987-10-05)

## Beschreibung

Die Erfindung betrifft ein vorgespanntes, mit einer wischfesten, porösen SiO₂-Antireflex-Schicht versehenes Sicherheitsglas, sowie ein Verfahren zu dessen Herstellung. Die poröse SiO₂-Antireflexionsbeschichtung zeigt eine ausgezeichnete Haftung und sie erhöht die Transmission von sichtbarer oder anderer elektromagnetischer Strahlung bei gleichzeitiger Verhütung oder Minimierung unerwünschter Reflexionen. Das erfindungsgemäße Sicherheitsglas wird z.B. für Abdeckungen von Sonnenkollektoren und von photovoltaischen Zellen verwendet. Es kann aber auch für Kfz-Windschutzscheiben oder für Bauverglasungen eingesetzt werden.

Beim Durchgang von Licht durch die Grenzfläche zweier Medien mit unterschiedlichen Brechungsindices wird ein Teil der Strahlung reflektiert. Beim senkrechten Einfall von Licht auf eine Glasscheibe mit dem Brechungsindex n = 1.5 beträgt der reflektierte Anteil beim Eintritt ins Glas ca. 4 %. Fällt das Licht schräg auf die Grenzfläche, wird in der Regel ein weitaus größerer Anteil reflektiert. Die Verluste bei Gläsern, die z.B. zur Abdeckung solarer Systeme, wie etwa photovoltaischer Zellen oder Sonnenkollektoren, verwendet werden, verringern den Wirkungsgrad der Systeme.

Gängige industrielle Verfahren zur Entspiegelung von Glas nutzen das Prinzip der Interferenz. Dabei werden abwechselnd zwei oder mehr Schichten hoch und niedrig brechender Materialien übereinander gelegt. In einem bestimmten Wellenlängenbereich löschen sich dann die an den Grenzflächen reflektierten Wellen aus. Dieser Effekt kehrt sich bei Wellenlängen, die doppelt so groß wie die Design-Wellenlängen sind, in eine erhöhte Reflexion um. Daher ist die Bandbreite der Entspiegelung auf maximal eine Oktave begrenzt und zur solaren Energiegewinnung wegen des breitbandigen Sonnenspektrums nicht geeignet.

Die Lösung hierfür bietet ein bereits seit langem bekanntes physikalisches Konzept, das ebenfalls auf dem Interferenz-Prinzip beruht, jedoch die erforderlichen, extrem niedrigen Brechzahlen der Beschichtung durch Verdünnung des Beschichtungsmaterials mit Luft ermöglicht. Diese Einfachschichten führen zu einer sehr guten Antireflex-Wirkung, wenn deren Brechzahl der Wurzel des Wertes für das darunter liegende Glassubstrat entspricht.

Wird z.B. auf Glas (n = 1.5) eine Schicht der Dicke λ/4 aufgebracht, so kommt es zu destruktiver Interferenz zwischen dem reflektierten Anteil des Übergangs Luft/Schicht und des Übergangs Schicht/Glas. Die Bedingungen für destruktive Interferenz gelten jedoch immer nur für eine bestimmte Wellenlänge und einen bestimmten Einfallswinkel. Der Brechungsindex der Schicht bestimmt die Höhe des Reflexionsminimums. Für die optimale Entspiegelung von Glas muß er 1.22 betragen, um bei der Wellenlänge λ eine Reflexion von nahezu Null zu erreichen. Dieser niedrige Brechungsindex ist mit dichten Schichten nicht erzielbar.

Mit der Entwicklung von Einfachschichten auf Glas, die eine so niedrige Brechzahl aufweisen, wurde bereits vor 50 Jahren begonnen. Die seither beschriebenen Methoden lassen sich in drei Gruppen einteilen. Die erste betrifft das direkte Ätzen von Glas, die zweite poröse Beschichtungen und die dritte ist eine Kombination dieser beiden, d.h. es werden Schichten mit geringer Porosität nachträglich geätzt.

Poröse Schichten, die durch Ätzen von Glas hergestellt werden, zeichnen sich im Prinzip durch sehr gute optische Resultate aus. Hierfür eignen sich allerdings nur Gläser, die eine Phasenseparation eingehen, wie z.B. Borosilicat-Glas der Zusammensetzung 55-82 % SiO₂, 12-30 % B₂O₃, 2-12-% Alkalimetalloxide und 0-7 % Al₂O₃. Nachteilig sind jedoch die aufwendigen Ätzverfahren und die Verwendung von bedenklichen Säuren, wie z.B. NH₄F-HF.

In der US 2,474,061 werden poröse SiO₂-Schichten mit Reflexionen reduzierenden Eigenschaften beschrieben. Allerdings ist bekannt, dass bei Temperaturen zwischen 400 und 500 °C das poröse SiO₂-Gerüst zu sintern beginnt, wobei sich das bereits erreichte Porenvolumen wieder verkleinert, was mit einem Anstieg der Brechzahl und einer Abnahme der Antireflexionseigenschaften verbunden ist. [C.J. Brinker, S.P. Mukherjee. Thin Solid Films, 77 (1981), 141-148; R.B. Pettit, C.J. Brinker, C.S. Ashley, Solar Cells, 15 (1985), 267-278; B.E. Yoldas, Antireflective Graded Index Silica Coating, Method for Making, US 4,535,026; M.S.W. Vong, P.A. Sermon, Observing the breathing of silica sol-gel derived antireflection optical coatings, Thin solid Films, 293 (1997), 185] Neben reinen SiO₂-Systemen zeigen auch poröse Schichten, die chemisch der Zusammensetzung von Borosilicat-Glas gleichen, diesen Effekt. [C.J. Brinker, G.W. Scherer, Sol-Gel-Science, The Physics and Chemistry of Sol-Gel Processing, Academic Press, Inc., 1990, S. 583]

Dieses Verhalten poröser SiO₂-Schichten ist für die Herstellung wischfester, d.h. gut haftender SiO₂-Antireflex-Schichten auf Glas sehr nachteilig, denn ausreichend wischfeste SiO₂-Schichten auf Glas werden nur bei Temperaturen von mindestens 500 °C erhalten [K.J. Cathro, D.C. Constable, T. Solaga, Silica Low-Reflection Coatings for Collector Covers, By a Dip Coating Process, Solar Energy 32 (1984), 573], besser noch im Erweichungsbereich des Glases [H.R. Moulton, Composition for Reduction the Reflection of Light, US 2,601, 123], wobei die Haltezeit bei 550 °C mindestens 25 Minuten betragen muss.

Sollen mit einer SiO₂-Schicht versehene Gläser gehärtet und verformt werden, so sind dazu Temperaturen von mindestens 600 °C erforderlich. Aus dem Stand der Technik (siehe oben und DE 69304016 T2) ist aber zu entnehmen, dass bei diesen Temperaturen das SiO₂-Gerüst sintert, der Brechungsindex steigt und die SiO₂₋Schicht ihre antireflektiven Eigenschaften verliert. Das bedeutet, dass Gläser, die mit einer porösen SiO₂-Antireflex-Schicht versehen sind, nachträglich nicht in ein thermisch vorgespanntes Sicherheitsglas umgewandelt werden können.

Auch vorgespanntes Sicherheitsglas lässt sich nicht nachträglich mit einer wischfesten, d.h. gut haftenden SiO₂-Antireflex-Schicht ausrüsten, weil vorgespanntes Sicherheitsglas nach der Beschichtung nicht auf Temperaturen von 500 °C erhitzt werden kann, ohne dass sich das Glas wieder entspannt und seine Eigenschaft als Sicherheitsglas verliert. Derart hohe Temperaturen sind aber erforderlich, um der SiO₂-Schicht eine gute Haftung auf dem Glassubstrat zu verleihen.

Es wurden deshalb intensive Bemühungen unternommen, wischfeste SiO₂-Antireflexionsschichten auch bei niedrigen Temperaturen herzustellen. In diesem Zusammenhang wurden Mischungen silicatischer Partikel in einer molekularen Siloxan-Matrix als Binder untersucht [I.M. Thomas, Method for preparation of porous silica antireflection coatings varying in refractive index from 1.22 to 1.44, Appl. Opt. 31 (1984), 6145]. Es wurde jedoch festgestellt, dass die bei niedrigen Temperaturen hergestellten SiO₂-Schichten nur dann ausreichende Wischfestigkeit zeigen , wenn das Porenvolumen in der Schicht sank und sich damit die Brechzahl der Schicht erhöhte. Mit einer Erhöhung der Brechzahl ist aber eine Reduzierung der Antireflexionseigenschaften verbunden. Durch eine Erhöhung der Wischfestigkeit wird also eine Reduzierung der Antireflexionseigenschaften erhalten. Auch der Ersatz des Siloxan als Binder durch ein Derivat des Polytetrafluorethylen kann nicht verhindern, dass der Brechungsindex steigt und damit die Antireflexionseigenschaften schwinden. [H.G. Floch, P.F. Belleville, A Scratch-Resistant Single-Layer Antireflective Coating by a Low Temperature Sol-Gel-Route, J. Sol-Gel Sci. Tech. 1, (1994), 293-304; H.G. Floch, P.F. Belleville, Damage-Resistant Sol-Gel Optical Coatings for Advanced Lasers at CEL-V, J. Sol-Gel Sci. Tech. 2, (1994), 695-705]

In WO 9706896 wird ein Verfahren zur Herstellung poröse SiO₂-Schichten beschrieben.

Aufgabe der vorliegenden Erfindung ist es nun, ein vorgespanntes Sicherheitsglas bereit zu stellen, das mit einer wischfesten, d.h. gut haftenden, Antireflex-Schicht versehen ist, deren Brechungsindex möglichst gering ist und Werte bis 1.22 annehmen kann. Ferner ist es Aufgabe dieser Erfindung, ein Verfahren zur Herstellung eines derartigen Sicherheitsglases bereit zu stellen.

Gelöst wird diese Aufgabe durch ein vorgespanntes Sicherheitsglas gemäß Anspruch 1, das mit einer wischfesten, gut haftenden, porösen und sinterstabilen SiO₂-Antireflex-Schicht versehen ist. Das erfindungsgemäße Sicherheitsglas wird dadurch erhalten, dass man ein zur Herstellung von vorgespanntem Sicherheitsglas übliches Glas mit einer kolloid-dispersen Lösung beschichtet, dass man das beschichtete Glas trocknet und zum Entfernen der organischen Bestandteile und zum Vorspannen auf Temperaturen von mindestens 630°C erhitzt und anschließend thermisch abschreckt.

Die kolloid-disperse Lösung ist durch hydrolytische Kondensation von Silicium-Verbindungen der allgemeinen Formel l erhalten worden,

RₐSiX₄₋ₐ (I)

in der die Reste gleich, oder verschieden sind und R einen organischen Rest mit 1 bis 10 Kohlenstoff-Atomen bedeutet, der durch Sauerstoff- und/oder Schwefel-Atome und/oder durch Amino-Gruppen unterbrochen sein kann, X für Wasserstoff, Halogen, Hydroxy, Alkoxy, Acyloxy, Alkylcarbonyl, Alkoxycarbonyl oder NR'₂ steht, mit R' gleich Wasserstoff, Alkyl oder Aryl, und a gleich 0, 1 oder 2 ist.

Zur Herstellung der kolloidal-dispersen Lösung können monomere Silicium-Verbindungen der Formel I eingesetzt werden oder von diesen abgeleitete Vorkondensate. Die hydrolytische Kondensation erfolgt durch Einwirken von Wasser oder Feuchtigkeit und gegebenenfalls in Anwesenheit eines Katalysators und/oder eines Lösungsmittels.

Die kolloidal-disperse Lösung enthält außerdem eines oder mehrere organische Polymere, die eine oder mehrere OH- und/oder NH-Gruppen tragen. Die mittlere Molekülmasse dieser Polymere liegt zwischen 200 und 500.000, und das molare Verhältnis von Polymer zu organisch modifiziertem Silan der Formel I liegt zwischen 0.1 mmol/mol Silan und 100 mmol/mol Silan.

Die Beschichtungslösung weist einen pH-Wert von ≥ 7 auf. Dies kann z.B. dadurch erreicht werden, dass für die hydrolytische Kondensation der Silicium-Verbindungen der allgemeinen Formel I basische Kondensationskatalysatoren eingesetzt werden, wie z.B. Ammoniak oder basisch reagierende Polymere, wie z.B. Polyethylenimine. Als sehr vorteilhaft hat es sich erwiesen, wenn eine flüchtige Base eingesetzt wird, die dann durch einfache Temperaturerhöhung aus dem System ausgetrieben werden kann.

Derartige Beschichtungslösungen sind in der DE 196 42 419.A1 beschrieben.

Die Alkyl-Reste in der allgemeinen Formel I sind z.B. geradkettige, verzweigte oder cyclische Reste mit 1 bis 10 Kohlenstoff-Atomen und vorzugsweise niedere Alkyl-Reste mit 1 bis 6, besonders bevorzugt mit 1 bis 4 Kohlenstoff-Atomen. Spezielle Beispiele sind Methyl, Ethyl, n-Propyl, i-Propyl, n-Butyl, i-Butyl, s-Butyl, t-Butyl, n-Pentyl, n-Hexyl, Cyclohexyl, 2-Ethylhexyl, Dodecyl und Octadecyl.

Bevorzugte Aryl-Reste in der allgemeinen Formel I sind z.B. Phenyl, Biphenyl und Naphthyl. Die Alkoxy-, Acyloxy-, Alkylcarbonyl-, Alkoxycarbonyl-, Alkylamino- und Dialkylamino-Reste leiten sich vorzugsweise von den oben genannten Alkyl- und Aryl-Resten ab. Spezielle Beispiele sind Methoxy, Ethoxy, n- und i- Propoxy, n-, i-, s- und t-Butöxy, Monomethylamino, Monoethylamino, Dimethylamino, Diethylamino, N-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl.

Die genannten Reste können gegebenenfalls einen oder mehrere Substituenten tragen, z.B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Monoalkylamino, Dialkylamino, Trialkylammonium, Amido, Hydroxy, Formyl, Carboxy, Mercapto, Cyano, Isocyanato, Nitro, Epoxy, SO₃H oder PO₄H₂.

Unter den Halogenen sind Fluor, Chlor und Brom und insbesondere Chlor bevorzugt.

Die Silane der allgemeinen Formel 1 sind über die Reste X hydrolysierbar und kondensierbar. Über die hydrolytisch kondensierbaren Gruppen wird ein anorganisches Netzwerk mit Si-O-Si-Einheiten aufgebaut. Ohne Einschränkung der Allgemeinheit sind konkrete Beispiele für derartige Silane Cl₃SiCH₃, Si(CH₃)(OC₂H₅)₃, Si(C₂H₅)Cl₃, Si(C₂H₅)(OC₂H₅)₃, Si(CH=CH₂)(OC₂H₅)₃, Si(CH=CH₂)(OC₂H₄OCH₃)₃, Si(CH=CH₂)(OOCCH₃)₃, Cl₂Si(CH₃)₂, Si(CH₃)₂(OC₂H₅)₂, Si(C₂H₅)₂(OC₂H₅)₂, Cl₂Si(CH=CH₂)(CH₃), Si(CH₃)₂(OCH₃)₂, Cl₂Si(C₆H₅)₂, Si(C₆H₅)₂(OC₂H₅)₂, Cl₃Si(CH=CH₂), Si(OC₂H₅)₃(CH₂-CH=CH₂), Si(OOCCH₃)₃(CH₂-CH=CH₂) und (HO)₂Si(C₆H₅)₂.

In einer bevorzugten Ausführungsform des erfindungsgemäßen Verfahrens werden Silicium-Verbindungen der allgemeinen Formel SiX₄ eingesetzt. Ohne Einschränkung der Allgemeinheit sind konkrete Beispiele für derartige Silane SiCl₄, HSiCl₃, Si(OCH₃)₄, Si(OOCCH₃)₄ und Si(OC₂H₅)₄, wobei Tetraalkoxysilane besonders bevorzugt sind und Si(OCH₃)₄ (TMOS) ganz besonders bevorzugt ist.

Silane der allgemeinen Formel sind entweder käuflich erwerbbar oder nach Methoden herstellbar wie in "Chemie und Technologie der Silicone" (W. Noll, Verlag Chemie, Weinheim/Bergstraße, 1968) beschrieben. Sie können entweder als solche oder in vorkondensierter Form eingesetzt werden.

Zum Aufbau des anorganischen Netzwerkes werden die Silane der allgemeinen Formel I hydrolysiert und polykondensiert . Die Polykondensation erfolgt vorzugsweise nach dem Sol-Gel-Verfahren, wie es z.B. in den DE-A1 2758414, 2758415, 3011761, 3826715 und 3835968 beschrieben ist. Die hydrolytische Kondensation kann z.B. dadurch erfolgen, dass man den zu hydrolysierenden Silicium-Verbindungen, die entweder als solche oder gelöst in einem geeigneten Lösungsmittel vorliegen, das erforderliche Wasser bei Raumtemperatur oder unter leichter Kühlung direkt zugibt (vorzugsweise unter Rühren und in Anwesenheit eines Hydrolyse- und Kondensationskatalysators) und die resultierende Mischung daraufhin einige Zeit (ein bis mehrere Stunden) rührt.

Die Hydrolyse erfolgt in der Regel bei Temperaturen zwischen -20 und 130 °C, vorzugsweise zwischen 0 und 30 °C bzw. dem Siedepunkt des gegebenenfalls eingesetzten Lösungsmittels. Die beste Art und Weise der Zugabe von Wasser hängt vor allem von der Reaktivität der eingesetzten Ausgangsverbindungen ab. So kann man z.B. die gelösten Ausgangsverbindungen langsam zu einem Überschuss an Wasser tropfen oder man gibt Wasser in einer Portion oder portionsweise den gegebenenfalls gelösten Ausgangsverbindungen zu. Es kann auch nützlich sein, das Wasser nicht als solches zuzugeben, sondern mit Hilfe von wasserhaltigen organischen oder anorganischen Systemen in das Reaktionssystem einzutragen. Die Wasserzugabe kann aber auch über eine chemische Reaktion erfolgen, bei der Wasser im Laufe der Reaktion freigesetzt wird. Beispiele hierfür sind Veresterungen.

Wenn ein Lösungsmittel verwendet wird, kommen neben den niederen aliphatischen Alkoholen (z.B. Ethanol oder i-Propanol) auch Ketone, vorzugsweise niedere Dialkylketone, wie Aceton oder Methylisobutylketon, Ether, vorzugsweise niedere Dialkylether wie Diethylether oder Dibutylether, THF, Amide, Ester, insbesondere Essigsäureethylester, Dimethylformamid, Amine, insbesondere Triethylamin, und deren Gemische in Frage. In bevorzugten Ausführungsformen des erfindungsgemäßen Verfahrens werden Alkohole als Lösungsmittel eingesetzt, bevorzugt Ethanol, i-Propanol, n-Propanol, 1-Methoxy-2-propanol oder 2-Methoxyethanol und ganz besonders bevorzugt Methanol. Die Menge des eingesetzten Lösungsmittel richtet sich nach Menge und Löslichkeit der (teil)kondensierten Silicium-Verbindungen und der eingesetzten Polymere. Entscheidend ist, daß die erfindungsgemäße Beschichtungslösung in kolloidal-disperser Form vorliegt. Des weiteren kann ein Alkohol als Lösungsmittel als Moderator für die Hydrolyse und die Kondensation fungieren und man kann dadurch die Reaktivität des Systems steuern und den Erfordernissen des jeweiligen Anwendungsfalles anpassen.

Die Ausgangsverbindungen müssen nicht notwendigerweise bereits alle zu Beginn der Hydrolyse (Polykondensation) vorhanden sein, sondern in bestimmten Fällen kann es sich sogar als vorteilhaft erweisen, wenn nur ein Teil dieser Verbindungen zunächst mit Wasser in Kontakt gebracht wird und später die restlichen Verbindungen zugegeben werden.

Die Wasserzugabe kann auf einmal oder in mehreren Stufen, z.B. in drei Stufen, durchgeführt werden. Dabei kann in der ersten Stufe z.B. ein Zehntel bis ein Zwanzigstel der zur Hydrolyse benötigten Wassermenge zugegeben werden. Nach kurzem Rühren kann die Zugabe von einem Fünftel bis zu einem Zehntel der erforderlichen Wassermenge erfolgen und nach weiterem kurzen Rühren kann schließlich der Rest zugegeben werden.

Die Kondensationszeit richtet sich nach den jeweiligen Ausgangskomponenten und deren Mengenanteilen, dem gegebenenfalls verwendeten Katalysator der Reaktionstemperatur, etc. Im allgemeinen erfolgt die Polykondensation bei Normaldruck, sie kann jedoch auch bei erhöhtem oder bei verringertem Druck durchgeführt werden.

Neben hydrolytisch (teil)kondensierten Silicium-Verbindungen enthält die Beschichtungslösung eines oder mehrere organische Polymere in kolloidal-dispers gelöster Form. Diese Polymere weisen OH- und/oder NH-Gruppen auf und die mittleren Molekülmassen liegen zwischen 200 und 500.000, wobei das molare Verhältnis von Polymer zu organisch modifiziertem Silan 0.1 mmol/mol Silan bis 100 mmol/mol Silan beträgt. Die erfindungsgemäß zugesetzten Polymere enthalten OH-, NH- oder SH-Gruppen, über die eine Wechselwirkung mit dem anorganischen Netzwerk erfolgt, welches durch die hydrolytische Kondensation der Silicium-Verbindungen aufgebaut wurde. Durch diese Wechselwirkung wird eine gleichmäßige Verteilung der organischen Polymere im Polykondensat erreicht, die dann zu einer besonders homogenen Porosität der Antireflexionsbeschichtung führt.

Die organischen Polymere können entweder zu Beginn der hydrolytischen Kondensation zugegeben werden, während dessen oder nach deren Beendigung.

Ohne Einschränkung der Allgemeinheit sind konkrete Beispiele für derartige Polymere Polyhydrazide [-CO-R'-CO-NH-NH-CO-R"-CO-NH-NH-] oder Polyethylenimine [CH₂-CH₂-NH-]ₓ[-CH₂-CH₂-N-]_{y} [CH₂-CH₂-NH-]_{z}-CH₂-CH₂-NH₂. wobei Polyethylenglycolalkylether, Polyvinylacetate, Polyvinylpyrrolidone, Polyvinylalkohole, Poly-(2-ethyl-2-oxazoline), Poly-(hydroxymethacrylate) und Poly-(hydroxyacrylate) bevorzugt sind.

In bevorzugten Ausführungsformen des erfindungsgemäßen Verfahrens liegt die mittlere Molekülmasse der organischen Polymere zwischen 500 und 50.000.

Durch Größe und Menge des zugesetzten organischen Polymers kann die Porosität und damit der Brechungsindex der Antireflexionsbeschichtung gezielt gesteuert und den Anforderungen des jeweiligen Anwendungsfalles angepaßt werden. Beispielsweise hat eine Erhöhung des Porenvolumens eine Verminderung des Brechungsindex zur Folge. Das erfindungsgemäße Sicherheitsglas zeigt in Abhängigkeit seiner Porosität Brechungsindices, die zwischen 1.22 und 1.44, bevorzugt zwischen 1.22 und 1.33 liegen. Der Beschichtungsfachmann kann durch nur wenige Versuche die für den jeweiligen Brechungsindex erforderliche Porosität selbst ermitteln.

Ferner kann durch die Schichtdicke der Beschichtung deren Antireflexionsverhalten gezielt der Wellenlänge der einfallenden Strahlung angepaßt werden.

Die Beschichtungslösung wird nach üblichen Methoden auf die zu entspiegelnden Glas-Oberflächen aufgetragen und getrocknet. Es können alle Glassorten verwendet werden, die üblicherweise zur Herstellung von thermisch vorgespanntem Sicherheitsglas eingesetzt werden. Es versteht sich von selbst, dass in Abhängigkeit von der gewünschten Schichtdicke die Viskosität der Beschichtungslösung und die Parameter des Beschichtungsvorganges, z.B. die Geschwindigkeit des Eintauchens und Herausziehens des zu beschichtenden Glases in die bzw. aus der Beschichtungslösung, aufeinander abgestimmt sein müssen. Dies gehört aber zum Fachwissen eines jeden Beschichtungsfachmannes.

In vielen Fällen kann es von Vorteil sein, wenn man die Beschichtungslösung vor dem Auftragen auf das Glas durch Rühren oder Stehenlassen altern lässt. Dies führt zu einer Partikelvergrößerung und zur Ausbildung von oligomeren Strukturen. Es ist jedoch stets darauf zu achten, dass die Beschichtungslösung zum Zeitpunkt des Beschichtungsvorgangs kolloid-dispers, d.h. als Sol vorliegt. Dadurch werden besonders gleichmäßige und homogene Antireflexionsbeschichtungen erhalten.

Anschließend wird das beschichtete Glas getrocknet und auf Temperaturen von mindestens 630 °C erhitzt. Dadurch werden die organischen Bestandteile der Beschichtung entfernt, und es resultiert ein poröses SiO₂-Gerüst. Durch Temperaturen von mindestens 630 °C erhält das poröse SiO₂-Gerüst eine ausgezeichnete Haftung auf der Glasoberfläche. Anschließend wird das Glas durch Abschrecken thermisch vorgespannt, so dass es die Eigenschaften eines Sicherheitsglases erhält.

Überraschenderweise wurde festgestellt, dass poröse SiO₂-Schichten, die mit Beschichtungslösungen der DE 196 42 419 A1 hergestellt werden, entgegen der Lehrmeinung aus dem Stand der Technik bei Temperaturen von 630 °C nicht sintern, sondern bis zu Temperaturen von 1000 °C stabil sind und ihre Porosität und damit ihren Brechungsindex und ihre Antireflex-Eigenschaften behalten. Auch wenn aus dem Stand der Technik bekannt ist, dass SiO₂-Schichten wegen des hohen Schmelzpunktes von SiO₂ thermisch stark belastbar sind, so war es für den Fachmann dennoch nicht vorhersehbar, dass poröse SiO₂-Schichten bei Temperaturen von 630 °C ihre Porosität beibehalten und nicht sintern. Vielmehr war aus dem Stand der Technik (z.B. der DE 69304016 T2, Beispiel 1 und 2) zu entnehmen, dass sich poröse SiO₂-Schichten bei Temperaturen von 550 °C verfestigen und dass damit der Brechungsindex steigt.

Mit dem erfindungsgemäßen Verfahren ist es möglich, gleichzeitig die Beschichtung ohne zu sintern zu konditionieren, d.h. die Porosität und die ausgezeichnete Haftung der Schicht zu erzeugen, und das Glas thermisch vorzuspannen. Damit ist es überraschenderweise möglich, thermisch vorgespanntes Sicherheitsglas mit einer wischfesten, ausgezeichnet haftenden, porösen SiO₂-Antireflex-Schicht bereit zu stellen.

Ein weiterer Vorteil des erfindungsgemäßen Verfahrens besteht darin, dass wischfeste Antireflex-Schichten bei Temperaturen zwischen 630 und 700 °C schon innerhalb von nur 3 Minuten erhalten werden können.

Das erfindungsgemäße Verfahren wird dann bevorzugt angewendet, wenn zum thermischen Vorspannen des Glases Temperaturen von mindestens 700 °C erforderlich sind, und besonders bevorzugt bei Temperaturen von mindestens 800 °C.

In einer weiteren Ausführungsform des erfindungsgemäßen Verfahrens wird das beschichtete und erhitzte Glas vor dem thermischen Abschrecken einem Formgebungsprozess unterzogen. Überraschenderweise wurde festgestellt, dass die hierbei auftretenden Schäden an der porösen Schicht vernachlässigbar gering sind. So kann das beschichtete und erhitzte Glas vor dem Abschrecken z.B. gebogen werden. Auf diese Weise sind z.B. Kfz-Windschutzscheiben oder Bauverglasungen erhältlich.

Die erfindungsgemäße Antireflexionsbeschichtung kann z.B. zur Entspiegelung und zur Erhöhung der Transmission von Solaranlagen eingesetzt werden. Das erfindungsgemäße Sicherheitsglas findet z.B. Anwendung in photovoltaischen Zellen und in Sonnenkollektoren, als Kfz-Windschutzscheiben und als Bauverglasung.

Anhand von Ausführungsbeispielen wird das erfindungsgemäße Verfahren näher erläutert.

### Beispiel 1 :

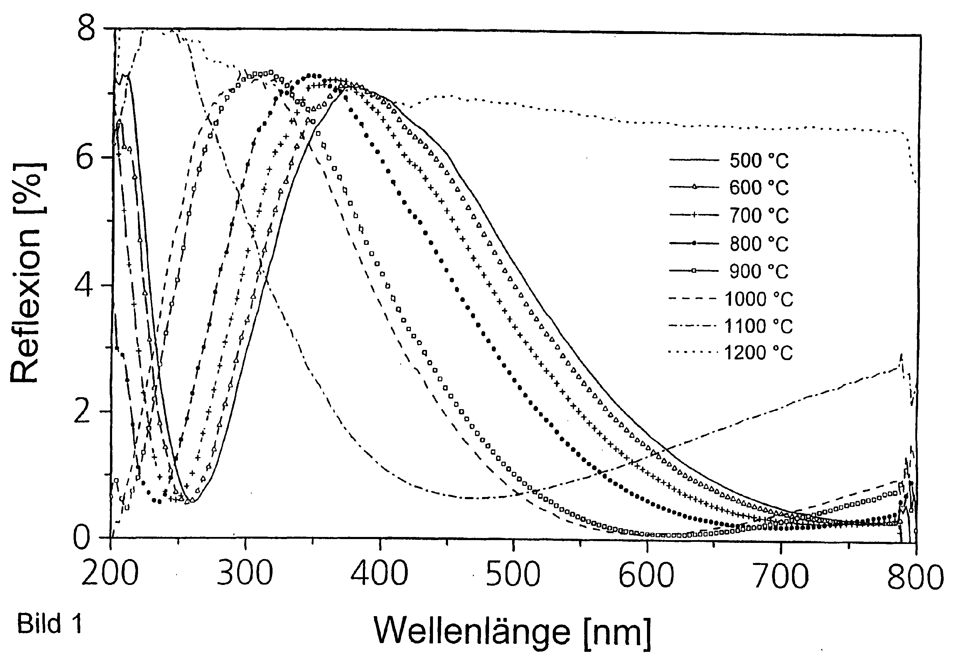

Zunächst wird eine Beschichtungslösung gemäß dem Ausführungsbeispiel der DE 196 42 419 A1 gefertigt. In diese Lösung werden nacheinander acht Kieselglasscheiben getaucht und mit konstanter Geschwindigkeit herausgezogen. Anschließend werden diese acht Scheiben jeweils 15 Minuten lang unterschiedlichen Temperaturen zwischen 500 und 1200 °C ausgesetzt und anschließend spektralphotometrisch vermessen. Die Ergebnisse sind in Abbildung 1 enthalten. Bei Proben, die Temperaturen zwischen 500 und 1000 °C ausgesetzt waren, werden Reflexionsminima von weniger als 0.5 % gemessen. Überraschenderweise nahm die resultierende Restreflexion sogar bis zu einer Temperatur von 1000 °C weiter ab, statt zuzunehmen. Erst oberhalb von 1000 °C verdichtet sich die poröse SiO₂₋Schicht. Diese Antireflex-Schichten sintern also erst in einem Temperaturbereich, der 500 °C über dem aus der Literatur bekannten liegt.

### Beispiel 2 :

In die Lösung aus Beispiel 1 wird eine Glasscheibe mit einer Fläche von 1 m² getaucht und mit konstanter Geschwindigkeit herausgezogen. Anschließend wird die Scheibe etwa 5 Minuten bei Raumtemperatur abgelüftet, bevor sie aus der Beschichtungsapparatur genommen und innerhalb von 3 Minuten durch einen Zonenofen geführt wird. In diesem Zonenofen wird das beschichtete Glas auf Temperaturen von über 600 °C gebracht und anschließend in einer Luftdusche abgeschreckt. Man erhält so Sicherheitsglas, das mit einer Antireflex-Schicht ausgerüstet ist. Bei Verwendung von eisenarmen Glas wird eine solare Transmission von 96 % erreicht. Die visuelle Transmission steigt bei einer Wellenlänge von 550 nm von 91.5 % im unbeschichteten Zustand auf über 95.5 % im beschichteten Zustand.

## Patentansprüche

1. Vorgespanntes Sicherheitsglas, **dadurch gekennzeichnet, dass** es mit einer whischfesten porösen SiO₂-Antireflex-Schicht versehen ist, die einen Brechungsindex zwischen 1.22 und 1.44 aufweist.

2. Sicherheitsglas nach Anspruch 1, **dadurch gekennzeichnet, dass** die Antireflex-Schicht einen Brechungsindex zwischen 1.22 und 1.33 aufweist.

3. Verfahren zur Herstellung eines Sicherheitsglases nach Anspruch 1 oder 2, **dadurch gekennzeichnet, dass** man ein zur Herstellung von vorgespanntem Sicherheitsglas übliches Glas mit einer kolloid-dispersen Lösung beschichtet,
welche erhalten worden ist durch hydrolytische Kondensation einer oder mehrerer Silicium-Verbindungen der allgemeinen Formel 1,
RₐSiX₄-a (I)
in der die Reste gleich oder verschieden sind und R einen organischen Rest mit 1 bis 10 Kohlenstoff-Atomen, bedeutet, der durch Sauerstoff- und/oder Schwefel-Atome und/oder durch Amino-Gruppen unterbrochen sein kann, X für Wasserstoff, Halogen, Hydroxy, Alkoxy, Acyloxy, Alkylcarbonyl, Alkoxycarbonyl oder NR'₂ steht, mit R' gleich Wasserstoff, Alkyl oder Aryl, und a gleich 0, 1 oder 2.
und/oder von diesen abgeleiteten Vorkondensaten, gegebenenfalls in Anwesenheit eines Lösungsmittels und/oder eines Katalysators durch Einwirken von Wasser oder Feuchtigkeit.
und welche eines oder mehrere OH- und/oder NH-Gruppen aufweisende organische Polymere mit einer mittleren Molekülmasse zwischen 200 und 500.000 in kolloidal gelöster Form enthält,
wobei das molare Verhältnis von Polymer zu organisch modifizierten Silan der allgemeinen Formel 1 zwischen 0.1 mmol/mol Silan und 100 mmol/mol Silan liegt,
und welche einen pH-Wert von ≥ 7 aufweist,
dass man das beschichtete Glas trocknet, dass man es zum Entfemen der organischen Bestandteile, zur Konditionierung der SiO₂-Schicht und zum Vorspannen auf Temperaturen von mindestens 630 °C erhitzt und dass man es thermisch abschreckt.

4. Verfahren nach Anspruch 3, **dadurch gekennzeichnet, dass** man als Silicium-Verbindung der allgemeinen Formel I SiX₄ einsetzt, wobei der Rest X die in Anspruch 1 genannte Bedeutung hat.

5. Verfahren nach Anspruch 3 oder 4, **dadurch gekennzeichnet, dass** man eine kolloidal-disperse Lösung einsetzt, deren Lösungsmittel ein Alkohol ist, bevorzugt Methanol, Ethanol, i-Propanol, n-Propanol, 1-Methoxy-2-propanol oder 2-Methoxyethanol.

6. Verfahren nach einem oder mehren Ansprüchen 3 bis 5, **dadurch gekennzeichnet, dass** man organische Polymere einsetzt, deren mittlere Molekularmasse zwischen 500 und 50.000 liegt.

7. Verfahren nach einem oder mehreren der Ansprüche 3 bis 6, **dadurch gekennzeichnet, dass** man als organisches Polymer einen Polyethylenglycolalkylether, ein Polyvinylacetat, ein Polyvinylpyrrolidon, einen Polyvinylalkohol, ein Poly-(2-ethyl-2-oxazolin), ein Poly-(hydroxymethylacrylat) oder ein Poly-(hydroxyacrylat) einsetzt.

8. Verfahren nach einem oder mehreren der Ansprüche 3 bis 7, **dadurch gekennzeichnet, dass** man das beschichtete Glas auf Temperaturen von mindestens 700 °C erhitzt.

9. Verfahren nach Anspruch 8, **dadurch gekennzeichnet, dass** man das beschichtete Glas auf Temperaturen von mindestens 800 °C erhitzt.

10. Verfahren nach einem oder mehreren der Ansprüche 3 bis 9, **dadurch gekennzeichnet, dass** man das erhitzte Glas vor dem Abschrecken einem Formgebungsprozess unterzieht.

11. Verwendung des mit einer Antireflexionsbeschichtung versehenen Sicherheitsglases nach Anspruch 1 oder 2 für Abdeckungen von Sonnenkollektoren, für photovoltaische Zellen und für Bauverglasungen.

## Claims

1. Toughened safety glass, **characterized in that** it is provided with a wipe-resistant porous SiO₂ antireflection coating which has a refractive index of between 1.22 and 1.44.

2. Safety glass according to Claim 1, **characterized**
**in that** the antireflection coating has a refractive index of between 1.22 and 1.33.

3. Process for producing a safety glass according to Claim 1 or 2, **characterized in that** a standard glass for the production of toughened safety glass is coated with a colloidally dispersed solution,
which has been obtained by hydrolytic condensation of one or more silicon compounds of the general formula I,
RₐSiX₄-a (I)
in which the radicals are identical or different and R denotes an organic radical containing 1 to 10 carbon atoms, which may be interrupted by oxygen and/or sulphur atoms and/or by amino groups, X represents hydrogen, halogen, hydroxyl, alkoxy, acyloxy, alkylcarbonyl, alkoxycarbonyl or NR'₂, where R' is hydrogen, alkyl or aryl, and a is equal to 0, 1 or 2,
and/or primary condensates derived therefrom, in the presence or absence of a solvent and/or a catalyst, by the action of water or moisture
and which contains one or more organic polymers containing OH and/or NH groups with a mean molecular mass of between 200 and 500 000 in colloidally dissolved form,
the molar ratio of polymer to organically modified silane of the general formula I being between 0.1 mmol/mol of silane and 100 mmol/mol of silane, and which has a pH of ≥ 7,
**in that** the coated glass is dried, **in that** it is heated to temperatures of at least 630°C in order to remove the organic constituents, to condition the SiO₂ layer and to toughen the glass, and **in that** it is thermally quenched.

4. Process according to Claim 3, **characterized in that** the silicon compound of the general formula I used is SiX₄, where the radical X has the meaning given in Claim 1.

5. Process according to Claim 3 or 4, **characterized in that** the solvent in the colloidally dispersed solution used is an alcohol, preferably methanol, ethanol, i-propanol, n-propanol, 1-methoxy-2-propanol or 2-methoxyethanol.

6. Process according to one or more of Claims 3 to 5, **characterized in that** organic polymers with a mean molecular mass of between 500 and 50 000 are used.

7. Process according to one or more of Claims 3 to 6, **characterized in that** the organic polymer used is a polyethylene glycol alkyl ether, a polyvinyl acetate, a polyvinylpyrrolidone, a polyvinyl alcohol, a poly-(2-ethyl-2-oxazoline), a poly(hydroxymethyl acrylate) or a poly(hydroxy acrylate).

8. Process according to one or more of Claims 3 to 7, **characterized in that** the coated glass is heated to temperatures of at least 700°C.

9. Process according to Claim 8, **characterized in that** the coated glass is heated to temperatures of at least 800°C.

10. Process according to one or more of Claims 3 to 9, **characterized in that** the heated glass is subjected to a shaping process prior to the quenching step.

11. Use of the safety glass provided with an antireflection coating according to Claim 1 or 2 for covering solar collectors, for photovoltaic cells and for construction glazing.

## Revendications

1. Verre de sécurité trempé, **caractérisé en ce qu'**il est muni d'une couche antireflet, poreuse et résistante à l'essuyage en SiO₂ qui a un indice de réfraction compris entre 1,22 et 1,44.

2. Verre de sécurité suivant la revendication 1, **caractérisé en ce que** la couche antireflet a un indice de réfraction compris entre 1,22 et 1,33.

3. Procédé de fabrication d'un verre de sécurité suivant la revendication 1 ou 2, **caractérisé en ce que** l'on revêt un verre habituel pour la fabrication de verre de sécurité trempé d'une solution en dispersion colloïdale,
qui a été obtenue par condensation hydrolytique d'un ou de plusieurs composés du silicium de formule générale I,
R_{B}SiX₄-a (I)
dans laquelle les radicaux sont identiques ou différents et R est un radical organique ayant de 1 à 10 atomes de carbone qui peut être interrompu par des atomes d'oxygène et/ou de soufre et/ou par des groupes amino, X représente hydrogène, halogène, hydroxy, alcoxy, acyloxy, alcoylcarbonyle, alcoxycarbonyle ou NR'₂, R' étant hydrogène, alcoyle ou aryle, et a étant égal à 0, 1 ou 2,
et/ou des précondensats qui en dérivent, le cas échéant en présence d'un solvant et/ou d'un catalyseur par action de l'eau ou de l'humidité,
et qui contient sous forme dissoute colloïdalement des polymères organiques ayant un ou plusieurs groupes OH et/ou NH et ayant une masse moléculaire moyenne comprise entre 200 et 500 000,
le rapport molaire du polymère au silane modifié organiquement de formule générale I étant compris entre 0,1 mmole/mole de silane et 100 mmole/mole de silane,
et qui a un pH supérieur ou égal à 7,
**en ce que** l' on sèche le verre revêtu, **en ce que**, pour éliminer les constituants organiques pour le conditionnement de la couche de SiO₂ et pour la trempe, on le porte à des températures d'au moins 630°C et **en ce qu'**on le trempe thermiquement.

4. Procédé suivant la revendication 3, **caractérisé en ce que** l'on utilise comme composite du silicium de formule générale I du SiX₄, dans lequel le radical X à la signification mentionnée dans la revendication 1.

5. Procédé suivant la revendication 3 ou 4, **caractérisé en ce qu'**on utilise une solution en dispersion colloïdale dont le solvant est un alcool, de préférence du méthanol, de l'éthanol, de l'isopropanol, n-propanol, du 1-méthoxy-2-propanol ou du 2-méthoxyéthanol.

6. Procédé suivant l'une ou plusieurs des revendications 3 à 5, **caractérisé en ce que** l'on utilise des polymères organiques dont la masse moléculaire moyenne est comprise entre 500 et 50 000.

7. Procédé suivant l'une ou plusieurs des revendications 3 à 6, **caractérisé en ce que** l'on utilise comme polymères organiques un oxyde alcoylique de polyéthylèneglycol, un poly(acétate de vinyle), une polyvinylpyrrolidone, de l'alcool polyvinylique, une poly(2-éthyl-2-oxazoline), un poly(hydroxyméthacrylate) ou un poly(hydroxyacrylate).

8. Procédé suivant l'une ou plusieurs des revendications 3 à 7, **caractérisé en ce que** l'on porte le verre revêtu à des températures d'au moins 700°C.

9. Procédé suivant la revendication 8, **caractérisé en ce que** l'on porte le verre revêtu à des températures d'au moins 800°C.

10. Procédé suivant l'une ou plusieurs des revendications 3 à 9, **caractérisé en ce que** l'on soumet le verre chauffé avant la trempe à une opération de façonnage.

11. Utilisation du verre de sécurité muni d'une couche antireflet suivant la revendication 1 ou 2 pour des recouvrements de collecteurs solaires, pour des cellules photovoltaïques ou pour des vitrages de bâtiments.
